# EUROPEAN PATENT SPECIFICATION

(11) **EP 0 937 743 B1**
(45) Date of publication and mention of the grant of the patent: **23.04.2003**
(21) Application number: 99300874.7
(22) Date of filing: 05.02.1999
(51) Int. Cl.: C08K 5/00, C08L 67/04

(54) **Improved stabiliser for Biodegradable polyester processing**
Verbesserter Stabilisator zur Verarbeitung biologisch abbaubarer Polyester
Stabilisateur amélioré pour la fabrication des polyesters biodégradables

(30) Priority: 20.02.1998 GB 9803636
(43) Date of publication of application: 25.08.1999
(73) Proprietor: KABUSHIKI KAISHA KOBE SEIKO SHO also known as Kobe Steel Ltd., Kobe 651-0072 (JP)
(72) Inventor: Qureshi, Naseer Mohammed, Weston, Ontario M9M 3A9 (CA); Woodfine, Barry, c/o Kobe Steel Europe Ltd., Guilford, Surrey GU2 5AF (GB)
(74) Representative: Lewin, John Harvey

(56) References cited:
- EP-A- 0 587 069
- EP-A- 0 677 561
- EP-A- 0 882 751
- GB-A- 1 124 870
- PATENT ABSTRACTS OF JAPAN vol. 098, no. 006, 30 April 1998 & JP 10 045889 A (SHIMADZU CORP;KOBE STEEL LTD), 17 February 1998

## Description

Biodegradable polymers are finding increased use as an environmentally friendly option to non-degradable polymers such as PP or PS or PET in many applications. In the class of biodegradable polyesters, poly(lactic acid) or polylactide polymers, known hereafter as PLA, are of commercial interest. Poly(glycolic acid) and lactic acid/glycolic acid copolymers are also useful. However, PLA suffers from stability problems at the high temperatures used during production and processing. This can result in deficiencies of PLA polymer and products such as discolouration or molecular weight (mw) reduction or lowering of crystallinity levels.

Cargill Inc (WO 94/07949) have made an attempt to overcome the high temperature depolymerisation problems associated with PLA. This depolymerisation is cited in terms of lactide monomer regeneration and mw reduction. The use of antioxidants or water scavengers or mixtures of antioxidants and water scavengers for this purpose is disclosed. The range of antioxidants includes alkyl and aryl phosphites, phosphonites, hindered phenolic compounds, aromatic amines, thioethers, quinones and mixtures of these. However. Cargill only demonstrate the effects of each of these stabiliser types singly through the Examples quoted in WO 94/07949 and do not evaluate mixed antioxidant packages. The stabiliser addition could be either before or after PLA polymer production. Cargill failed to prevent discolouration of the PLA polymer through the use of antioxidants unless conversion of lactide to polymer was restricted to <85% and mw<40,000. This low mw and level of conversion to PLA is not sufficient to develop the full properties of PLA polymer. This requires the PLA mw to be >70,000 according to Cargill. In commercial grade PLA, where good and consistent levels of properties are necessary, Cargill failed to demonstrate an effective anti-yellowing stabiliser. The stabilisers used in WO 94/07949 generally lead to deterioration in the level of crystallinity in PLA polymers. This results in deleterious consequences for a semi-crystalline polymer such as PLA. We have demonstrated that these problems with crystallinity and yellowing exist for the single antioxidants cited by Cargill (see Comparative Examples 1-27).

This problem with molecular weight reduction is also highlighted by Neste OY (WO 95/18169). In this document, it is noted that conventional stabilisers which can be used with aromatic polyesters are not effective with lactic acid polymers. Neste OY made use of peroxides to limit PLA mw reduction during processing by extrusion. Peroxides are limited to use after PLA production and cannot be added to the PLA production process (see also Comparative Examples 26-27).

Shell (GB 1,161,932) disclose the use of amine-based stabilisers for reducing the thermo-oxidative decomposition of aliphatic polyesters, especially cyclic lactone derived polymers. The stabiliser can be used singly, or in combination with a wide range of other species. The stabiliser(s) can be added either to the lactone precursor or the polymer product as alternative routes for incorporation of the stabiliser(s) into the polymer. However, although the intrinsic viscosity of the polymer may be maintained by addition of stabiliser, it is clear that discolouration of PLA cannot be prevented by amine-based stabilisers (see Comparative Examples 21-23).

Thus, there exists a need for an improved stabiliser for use in PLA which prevents discolouration and maintains mw and crystalline melt temperature (Tm) of commercial-type PLA polymer. We have found that a mixture of stabilisers is required for this purpose.

EP 0 677 561 and EP 0 587 069 disclose a degradable resin composition suitable for use as an adhesive tape containing 100 parts by weight of a lactic acid base polymer and 0.001-5 parts by weight of one or more additives. The additives include UV absorbers and light stabilisers as well as plasticizers, antioxidants, heat stabilisers, lubricants, pigments and other additives.

We have provided a stabilising package for aliphatic polyesters, especially PLA polymers. The stabiliser package serves several purposes;
- prevents the discolouration or yellowing of the polymer during production and moulded articles manufactured from it
- prevents any reduction in Tm (often observed with standard stabilisers)
- limits the reduction in crystallinity of the polymer (observed with standard stabilisers).

The present invention provides a stabilised biodegradable polyester composition, comprising a biodegradable polyester of lactic acid and/or glycolic acid, and a stabiliser which comprises a phosphite- or phosphate-containing compound, a hindered phenolic compound, and an acrylate.

The polyester is preferably obtained by polymerisation of lactide and/or glycolide.

The phosphite- or phosphate-containing compound is preferably of the general formula (I), (II) or (III):

P(O)ₓ(OAr)₃ (I)

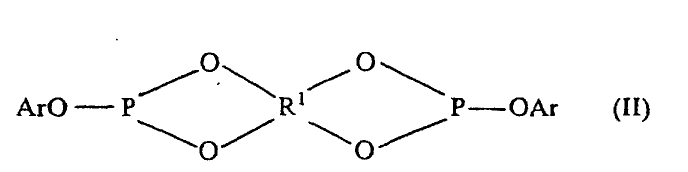

(ArO)₂P―R²―P(OAr)₂ (III)

in which
x is 0 or 1;
Ar each independently is an optionally substituted aromatic group; and
R¹ and R² are aliphatic or aromatic groups.

Ar is preferably phenyl or naphthyl, and is preferably substituted by C₁-C₁₀ alkyl or C₁-C₁₀ alkoxy.

R¹ is preferably a C₄-C₁₀ aliphatic hydrocarbon group (most preferably C(CH₂-)₄) or an aromatic group of the formula: 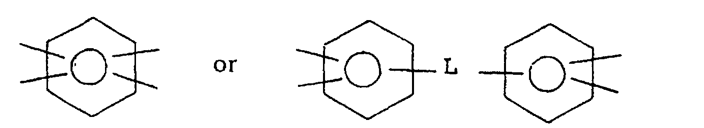 where L is a direct bond or a linking group such as S, SO, SO₂, CO, O or C₁-C₆ alkylene.

R² is preferably a C₁-C₁₀ aliphatic hydrocarbon group (most preferably an alkylene, alkyleneoxy or oxyalkyleneoxy group, where the alkylene moiety is optionally interrupted by one or more O atoms) or an aromatic group of the formula: 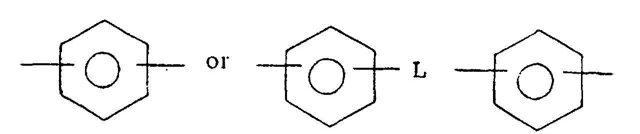 where L is as defined above.

The hindered phenolic compound is preferably of the general formula (IV): 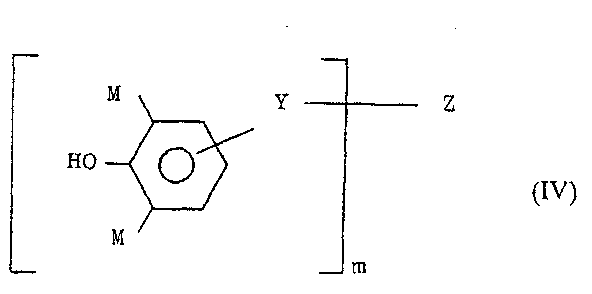 where
M each independently is an aliphatic group;
Y is an aliphatic group;
m is an integer from 1 to 4; and
Z is an aliphatic or aromatic group or
H if m is 1.
M is preferably C₁-C₁₀ alkyl or C₁-C₁₀ alkoxy.
Y is preferably C₁-C₁₀ alkylene or C₁-C₁₀ alkylenecarboxy, where the alkylene moiety is optionally interrupted by one or more O atoms.
Z is preferably a C₁-C₂₀ aliphatic hydrocarbon group, or a 6-membered carbocyclic or heterocyclic aromatic ring.

The acrylate is preferably of the general formula (V): 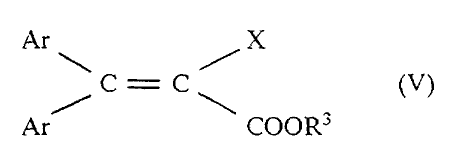 where
Ar each independently is an optionally substituted aromatic group;
R³ is an aliphatic group; and
X is an electron-withdrawing group.
Ar is preferably phenyl or naphthyl, and may be substituted by C₁-C₁₀ alkyl or C₁-C₁₀ alkoxy.
R³ is preferably C₁-C₁₀ alkyl optionally interrupted by one or more O atoms.
X is preferably cyano or halogen.

The total content of stabiliser is preferably up to 2 wt%, more preferably from 0.1 to 0.5 wt%, of the weight of biodegradable polyester.

The invention also relates to use of a stabiliser composition comprising a phosphite-containing compound, a hindered phenolic compound, and an acrylate, for stabilising a biodegradable polyester of lactic acid and/or glycolic acid.

The invention further provides a process for preparing a stabilised polyester composition, which comprises polymerisation of lactide and/or glycolide in the presence of a stabiliser comprising a phosphite-containing compound, a hindered phenolic compound, and an acrylate.

The invention additionally provides a shaped product prepared from a stabilised biodegradable polyester composition as defined above.

The stabiliser package is a combination of different chemical types taken from the list; phosphite or phosphate, hindered phenolic, acrylate. Multifunctional and closely related chemical types such as phosphonite and fluorophosphonite perform in a similar manner as simple phosphite, phenolic and acrylate compounds. Materials which are found to destroy the desired action and outcome of using our stabiliser package include aromatic amines, peroxides, organo-metallic complexes, thioethers or other organic sulphur compounds and are specifically excluded at addition levels of >0.5 wt%.

Any member of the phosphite or phosphate and phenolic and acrylate classes may be used, but the preferred materials are alkyltriphenyl phosphites, alkyldiphenylphosphates, bis[alkylphenyl]pentaerythritol diphosphites (phosphite or phosphate class), alkyl-[di-*t*-butyl hydroxyphenyl]propionates, butylated hydroxytoluenes (hindered phenolic class), alkyl esters of 2-cyano-3,3-diphenylacrylic acid (acrylate class).

The combination of stabilisers can be present when the lactide monomer is converted to PLA without interfering with the polymerisation catalyst. The PLA polymer produced is of high mw (>150,000), high Tm (>170°C), high crystallinity levels (>40%) and very low colour (essentially colourless). This combination of PLA properties has never before been achieved together. The presence of the stabilisers in the "as produced" PLA also protects the PLA in any further fabrication steps and eliminates the need to compound the PLA further before moulding to final product form.

The following Examples illustrate the invention.

**Comparative Examples 1-27.** Vial polymerisations of pure L-lactide were carried out at 180°C for 20 hours. The catalyst used was tin octoate at a concentration level of 50ppm with respect to the lactide monomer. All stabilisers were added at 0.25 wt%. Analysis of mw, Tm, crystallinity level (%cr) and yellowness index (YI) of PLA product was carried out by standard methods and the results are given in Table 1. The method of analysis were:
mw - GPC (gel permeation chromatography)
Tm, crystallinity - DSC (differential scanning calorimetry)
YI - spectrometry. Product designations in Table 1 are tradenames or registered trademarks.

**Table 1.**

| Example | Stabiliser | PLA mw | PLA Tm | %cr of PLA | PLA YI |
|---|---|---|---|---|---|
| 1 | None (control sample) | 278,100 | 177 | 49 | 15 |
| 2 | None (control sample) | 256,900 | 178 | 47 | 15 |
| 3 | None (control sample) | 264,000 | 177 | 49 | 15 |

| | *Phosphorus-based.* | | | | |
|---|---|---|---|---|---|
| 4 | Irgafos 168 | 279,300 | 173 | 27 | 10 |
| 5 | Santicizer 148 | 265,000 | 98 | 8 | 11 |
| 6 | Triphenyl phosphite | 292,300 | 159 | 21 | 13 |
| 7 | Alkanox P24 | 312,500 | 175 | 26 | 13 |
| 8 | Alkanox 240 | 235,700 | 169 | 32 | 12 |
| 9 | Lowinox TNPP | 210,200 | 167 | 32 | 12 |
| 10 | Ethanox 398 | 66,800 | 144 | 22 | 13 |

| | *Hindered phenolics.* | | | | |
|---|---|---|---|---|---|
| 11 | Butylated hydroxytoluene | 228,600 | 176 | 40 | 17 |
| 12 | Irganox 1010 | 154,500 | 175 | 44 | 15 |
| 13 | Irganox 1076 | 190,900 | 175 | 38 | 16 |
| 14 | Alvinox FB | 105,400 | 177 | 48 | 17 |
| 15 | Alvinox 100 | 155,400 | 178 | 50 | 15 |
| 16 | Ronotec 201 | 112,900 | 157 | 28 | 14 |
| 17 | Uvasorb 20H | 132,100 | 170 | 29 | 14 |
| 18 | Uvasorb MET | 155,600 | 173 | 40 | 16 |

| | *Acrylates.* | | | | |
|---|---|---|---|---|---|
| 19 | Uvinol 3035 | 185,500 | 179 | 45 | 12 |
| 20 | Uvinol 3039 | 118,800 | 173 | 35 | 14 |

| | *Amines.* | | | | |
|---|---|---|---|---|---|
| 21 | Anox ODS | 189,700 | 177 | 43 | 31 |
| 22 | Chimassorb 944 | No conversion to PLA | | | - |
| 23 | Tinuvin 770 | No conversion to PLA | | | - |

| | *Sulphur-based.* | | | | |
|---|---|---|---|---|---|
| 24 | Lankromark DLTDP | 157,900 | 174 | 39 | 17 |
| 25 | Robac ZDBC | 65,700 | 163 | 31 | 45 |

| | *Peroxides.* | | | | |
|---|---|---|---|---|---|
| 26 | Dibenzoyl peroxide | 67,700 | 169 | 18 | 14 |
| 27 | Cumylperoxide | 59,200 | 147 | 10 | 17 |

**Comparative Examples 28-45 and Examples 46-49.** Vial polymerisations of pure L-lactide were carried out at 180° C for 20 hours. The catalyst used was tin octoate at a concentration level of 50ppm with respect to the lactide monomer. Stabilisers used and addition levels (in wt%) are given in Tables 2-4. Analysis of mw, Tm, crystallinity level (%cr) and yellowness index (YI) of PLA product was carried out by standard methods and the results are given in Table 5. Product designations in Tables 2-4 are tradenames or registered trademarks.

**Table 2.**

| Example | 28 | 29 | 30 | 31 | 32 | 33 | 34 | 35 |
|---|---|---|---|---|---|---|---|---|
| *Hindered phenolics.* | | | | | | | | |
| Butylated hydroxytoluene | 0.2 | 0.2 | 0.2 | 0.2 | 0.2 | - | - | - |
| Irganox 1076 | - | - | - | - | - | 0.2 | 0.2 | 0.2 |

| *Phosphorus-based.* | | | | | | | | |
|---|---|---|---|---|---|---|---|---|
| Santicizer 148 | 0.1 | - | - | - | - | 0.1 | - | - |
| Triphenyl phosphite | - | 0.1 | - | - | - | - | 0.1 | - |
| Irgafos 168 | - | - | 0.1 | - | - | - | - | 0.1 |
| Alkanox 240 | - | - | - | 0.1 | - | - | - | - |
| Alkanox P24 | - | - | - | - | 0.1 | - | - | - |

**Table 3.**

| Example | 36 | 37 | 38 | 39 | 40 | 41 | 42 | 43 | 44 | 45 |
|---|---|---|---|---|---|---|---|---|---|---|
| *Acrylates.* | | | | | | | | | | |
| Uvinol 3035 | 0.2 | 0.2 | 0.2 | 0.2 | 0.2 | 0.2 | - | - | - | 0.2 |
| Uvinol 3039 | - | - | - | - | - | - | 0.2 | 0.2 | 0.2 | - |

| *Hindered phenolics.* | | | | | | | | | | |
|---|---|---|---|---|---|---|---|---|---|---|
| Irganox 1076 | - | - | - | - | - | - | - | - | - | 0.1 |

| *Phosphorus-based.* | | | | | | | | | | |
|---|---|---|---|---|---|---|---|---|---|---|
| Ethanox 398 | 0.1 | - | - | - | - | - | - | - | - | - |
| Santicizer 148 | - | 0.1 | - | - | - | - | 0.1 | - | - | - |
| Triphenyl | - | - | 0.1 | - | - | - | - | 0.1 | - | - |
| phosphite | - | - | - | 0.1 | - | - | - | - | 0.1 | - |
| Irgafos 168 | - | - | - | - | 0.1 | - | - | - | - | - |
| Alkanox 240 | - | - | - | - | - | 0.1 | - | - | - | - |
| Alkanox P24 | | | | | | | | | | |

**Table 4.**

| Example | 46 | 47 | 48 | 49 |
|---|---|---|---|---|
| *Acrylates.* | | | | |
| Uvinol 3035 | 0.15 | 0.15 | 0.15 | 0.15 |

| *Hindered phenolics.* | | | | |
|---|---|---|---|---|
| Irganox 1076 | 0.1 | 0.1 | 0.1 | 0.1 |

| *Phosphorus-based.* | | | | |
|---|---|---|---|---|
| Santicizer 148 | 0.05 | - | - | - |
| Irgafos 168 | - | 0.05 | - | - |
| Alkanox 240 | - | - | 0.05 | - |
| Alkanox P24 | - | - | - | 0.05 |

**Table 5.**

| Example | PLA mw | PLA Tm | %cr of PLA | PLA YI |
|---|---|---|---|---|
| 28 (Comp) | 366,300 | 150 | 19 | 11 |
| 29 (Comp) | 363,400 | 144 | 18 | 12 |
| 30 (Comp) | 283,900 | 172 | 2 | 9 |
| 31 (Comp) | 272,400 | 170 | 6 | 9 |
| 32 (Comp) | 202,900 | 170 | 30 | 13 |
| 33 (Comp) | 341,100 | 169 | 14 | 10 |
| 34 (Comp) | 311,100 | 147 | 15 | 9 |
| 35 (Comp) | 225,000 | 174 | 39 | 13 |
| 36 (Comp) | 186,500 | 148 | 24 | 5 |
| 37 (Comp) | 327,800 | 169 | 33 | 9 |
| 38 (Comp) | 276,400 | 162 | 19 | 8 |
| 39 (Comp) | 251,500 | 151 | 17 | 7 |
| 40 (Comp) | 244,100 | 170 | 28 | 7 |
| 41 (Comp) | 243,000 | 156 | 12 | 8 |
| 42 (Comp) | 363,400 | 153 | 18 | 6 |
| 43 (Comp) | 304,000 | 160 | 19 | 5 |
| 44 (Comp) | 177,900 | 164 | 28 | 7 |
| 45 (Comp) | 247,800 | 172 | 38 | 10 |
| 46 (Inv) | 176,600 | 163 | 31 | 3 |
| 47 (Inv) | 176,200 | 177 | 41 | 2 |
| 48 (Inv) | 169,300 | 176 | 47 | 3 |
| 49 (Inv) | 99,400 | 175 | 47 | 2 |

The stabilisers used in the Examples are manufactured or supplied by the following:
- Ciba: - Irgafos 168
- Irganox 1010
- Irganox 1076
- Chimassorb 944
- Tinuvin 770
- 3v: - Alkanox P24
- Alkanox 240
- Alvinox FB
- Alvinox 100
- Uvasorb 20H
- Uvasorb MET
- Monsanto: - Santicizer 148
- Aldrich: - Triphenylphosphite
- Lowe: - Lowinox TNPP
- Ethyl: - Ethanox 398
- ICI: - Butylated hydroxytoluene
- Roche: - Ronotec 201
- BASF: - Uvinol 3035
- Uvinol 3039
- Great Lakes Chemicals: - Anox ODS
- Akros: - Lankromark DL TDP
- Robinson Brothers: - Robac ZDBC
- Akzo: - Dibenzoyl peroxide
- Cumyl peroxide
- Comp =: Comparative Example
- Inv =: Invention

## Claims

1. A stabilised biodegradable polyester composition, comprising a biodegradable polyester of lactic acid and/or glycolic acid, and a stabiliser which comprises a phosphite- or phosphate-containing compound, a hindered phenolic compound, and an acrylate.

2. A composition according to claim 1, in which the polyester is obtained by polymerisation of lactide and/or glycolide.

3. A composition according to claims 1 or 2, in which the phosphite- or phosphate-containing compound is of the general formula (I), (II) or (III):
P(O)ₓ(OAr)₃ (I) 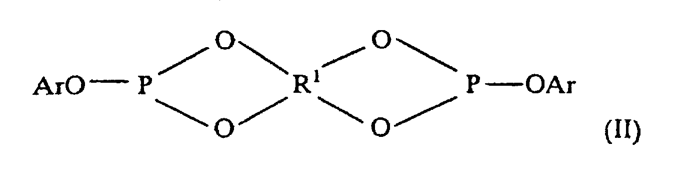
(ArO)₂P―R²―P(OAr)₂ (III)
in which
x is 0 or 1;
Ar each independently is an optionally substituted aromatic group; and
R¹ and R² are aliphatic or aromatic groups.

4. A composition according to any of claims 1 to 3, in which the hindered phenolic compound is of the general formula (IV): 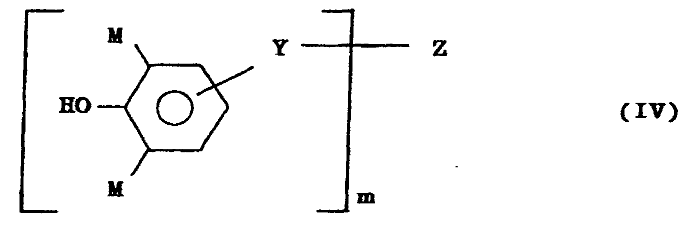 where
M each independently is an aliphatic group;
Y is an aliphatic group;
m is an integer from 1 to 4; and
Z is an aliphatic or aromatic group or
H if m is 1.

5. A composition according to any of claims 1 to 4, in which the acrylate is of the general formula (V): 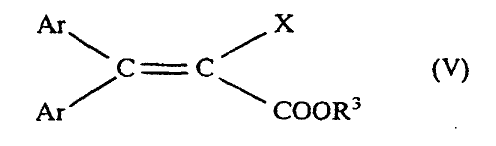 where
Ar each independently is an optionally substituted aromatic group;
R³ is an aliphatic group; and
X is an electron-withdrawing group.

6. A composition according to any of claims 1 to 5, in which the total content of stabiliser is up to 2 wt%, preferably from 0.1 to 0.5 wt%, of the weight of biodegradable polyester.

7. Use of a stabiliser composition comprising a phosphite- or phosphate-containing compound, a hindered phenolic compound, and an acrylate, for stabilising a biodegradable polyester of lactic acid and/or glycolic acid.

8. A process for preparing a stabilised polyester composition, which comprises polymerisation of lactide and/or glycolide in the presence of a stabiliser comprising a phosphite- or phosphate-containing compound, a hindered phenolic compound, and an acrylate.

9. A shaped product prepared from a stabilised biodegradable polyester composition according to any of claims 1 to 6.

## Patentansprüche

1. Stabilisierte, biologisch abbaubare Polyesterzusammensetzung, umfassend einen biologisch abbaubaren Polyester von Milchsäure und/oder Glycolsäure und ein Stabilisierungsmittel, welches eine Phosphit- oder Phosphat-enthaltende Verbindung, eine gehinderte phenolische Verbindung und ein Acrylat umfaßt.

2. Zusammensetzung nach Anspruch 1, in welcher der Polyester durch Polymerisation von Lactid und/oder Glycolid erhalten ist.

3. Zusammensetzung nach Anspruch 1 oder 2, in welcher die Phosphit- oder Phosphat-enthaltende Verbindung von der allgemeinen Formel (I), (II) oder (III) ist:
**P(O)**_{**x**}**(OAr)**_{**3**} **(I)** 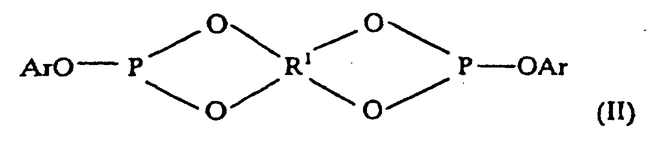
**(ArO)**_{**2**}**P―R**^{**2**}**―P(OAr)**_{**2**} **(III)**
in welchen
x 0 oder 1 ist,
Ar jeweils unabhängig eine gegebenenfalls substituierte aromatische Gruppe ist und
R¹ und R² aliphatische oder aromatische Gruppen sind.

4. Zusammensetzung nach einem der Ansprüche 1 bis 3, in welcher die gehinderte phenolische Verbindung von der allgemeinen Formel (IV) ist: 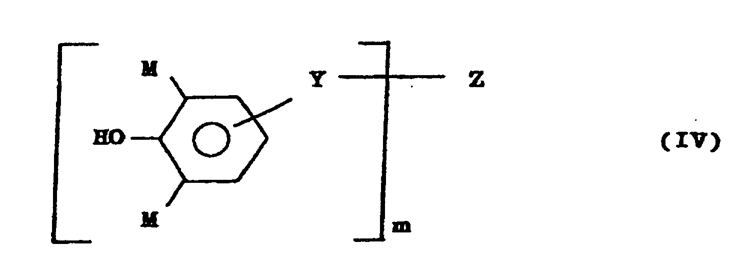 worin
M jeweils unabhängig eine aliphatische Gruppe ist,
Y eine aliphatische Gruppe ist,
m eine ganze Zahl von 1 bis 4 ist und
Z eine aliphatische oder aromatische Gruppe oder H, wenn m 1 ist, ist.

5. Zusammensetzung nach einem der Ansprüche 1 bis 4, in welcher das Acry. lat von der allgemeinen Formel (V) ist: 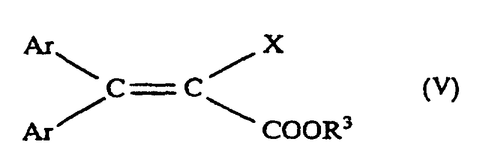 worin
Ar jeweils unabhängig eine gegebenenfalls substituierte aromatische Gruppe ist,
R³ eine aliphatische Gruppe ist und
X eine elektronenziehende Gruppe ist.

6. Zusammensetzung nach einem der Ansprüche 1 bis 5, in welcher der Gesamtgehalt an Stabilisierungsmittel bis zu 2 Gew.-%, bevorzugt 0,1 bis 0,5 Gew.-%, des Gewichts des biologisch abbaubaren Polyesters, beträgt.

7. Verwendung einer Stabilisierungsmittelzusammensetzung, umfassend eine Phosphit- oder Phosphat-enthaltende Verbindung, eine gehinderte phenolische Verbindung und ein Acrylat, zum Stabilisieren eines biologisch abbaubaren Polyesters von Milchsäure und/oder Glycolsäure.

8. Verfahren zum Herstellen einer stabilisierten Polyesterzusammensetzung, welches Polymerisation von Lactid und/oder Glycolid in der Gegenwart eines eine Phosphit- oder Phosphat-enthaltende Verbindung, eine gehinderte phenolische Verbindung und ein Acrylat umfassenden Stabilisierungsmittels.

9. Geformtes Produkt, hergestellt aus einer stabilisierten biologisch abbaubaren Polyesterzusammensetzung nach einem der Ansprüche 1 bis 6.

## Revendications

1. Composition de polyester biodégradable stabilisée, comprenant un polyester biodégradable d'acide lactique et/ou d'acide glycolique, et un stabilisateur qui comprend un composé contenant un phosphite ou un phosphate, un composé phénolique freiné, et un acrylate.

2. Composition selon la revendication 1, dans laquelle le polyester est obtenu par polymérisation de lactide et/ou de glycolide.

3. Composition selon la revendication 1 ou 2, dans laquelle le composé contenant un phosphite ou un phosphate est de la formule générale (I), (II) ou (III) :
**P(O)**_{**x**}**(OAr)**_{**3**} **(I)** 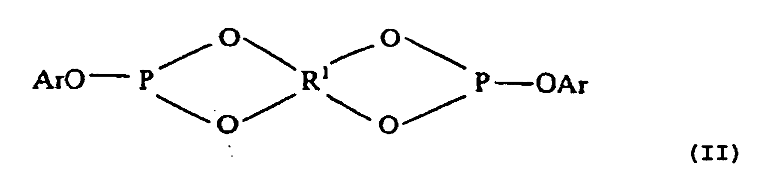
**(ArO)**_{**2**}**P-R**^{**2**}**-P(OAr)**_{**2**} **(III)**
où
x est 0 ou 1 ;
chaque Ar est indépendamment un groupe aromatique optionnellement substitué ; et
R¹ et R² sont des groupes aliphatiques ou aromatiques.

4. Composition selon l'une quelconque des revendications 1 à 3, dans laquelle le composé phénolique freiné est de la formule générale (IV) : 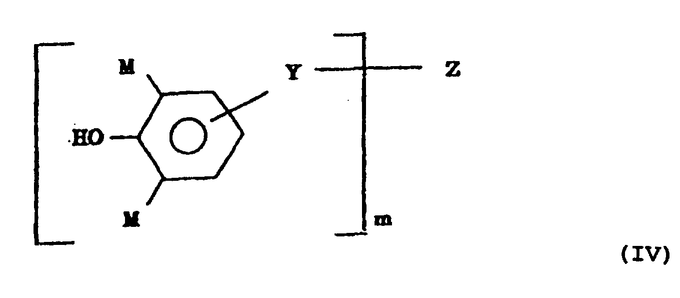 où
chaque M est indépendamment un groupe aliphatique ;
Y est un groupe aliphatique ;
m est un nombre entier de 1 à 4 ; et
Z est un groupe aliphatique ou aromatique ou
H si m est 1.

5. Composition selon l'une quelconque des revendications 1 à 4, dans laquelle l'acrylate est de la formule générale (V) : 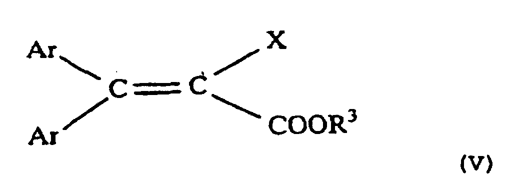 où
chaque Ar est indépendamment un groupe aromatique optionnellement substitué ;
R³ est un groupe aliphatique ; et
X est un groupe retirant les électrons.

6. Composition selon l'une quelconque des revendications 1 à 5, dans laquelle la teneur totale en stabilisateur peut atteindre 2% en poids, de préférence de 0,1 à 0,5% en poids du polyester biodégradable.

7. Utilisation d'une composition stabilisatrice comprenant un composé contenant un phosphite ou un phosphate, un composé phénolique freiné, et un acrylate, pour stabiliser un polyester biodégradable d'acide lactique et/ou d'acide glycolique.

8. Procédé pour préparer une composition de polyester stabilisée, qui comprend la polymérisation de lactide et/ou de glycolide en présence d'un stabilisateur comprenant un composé contenant un phosphite ou un phosphate, un composé phénolique freiné, et un acrylate.

9. Produit formé préparé à partir d'une composition de polyester biodégradable stabilisée selon l'une quelconque des revendications 1 à 6.
